Europäisches Patentamt

European Patent Office

Office européen des brevets

(19)

(11) Numéro de publication: **0 050 579
B1**

(12) # FASCICULE DE BREVET EUROPEEN

(45) Date de publication du fascicule du brevet:
14.03.84

(51) Int. Cl.³: **C 10 K 1/00,** C 10 K 1/02,
C 10 K 1/04, C 10 J 3/84

(21) Numéro de dépôt: 81430021.6

(22) Date de dépôt: 03.07.81

(54) **Procédé et installation pour produire des gaz combustibles froids et propres au moyen d'un gazéificateur de combustibles solides.**

(30) Priorité: 13.10.80 FR 8021990

(43) Date de publication de la demande:
28.04.82 Bulletin 82/17

(45) Mention de la délivrance du brevet:
14.03.84 Bulletin 84/11

(84) Etats contractants désignés:
DE FR IT SE

(56) Documents cités:
BE - A - 430 623
DE - A - 2 701 166
DE - B - 1 260 666
DE - B - 2 853 989
FR - A - 803 303
FR - A - 2 286 873

(73) Titulaire: **ENTREPRISE GENERALE DE CHAUFFAGE INDUSTRIEL PILLARD. Société anonyme dite:, 13, rue Raymond Teissère, F-13008 Marseille (FR)**

(72) Inventeur: **Pillard, Jean-Claude, 331 avenue du Prado "Le Montcalm" - Bât. D., F-13008 Marseille (FR)**

(74) Mandataire: **Azais, Henri et al, c/o CABINET BEAU DE LOMENIE 14, rue Raphael, F-13008 Marseille (FR)**

BUNDESDRUCKEREI BERLIN

# Procédé et installation pour produire des gaz combustibles froids et propres au moyen d'un gazéificateur de combustibles solides

L'invention a pour objet un procédé et une installation pour produire des gaz combustibles froids et propres au moyen d'un gazéificateur de combustibles solides.

Le secteur technique de l'invention est celui de la transformation des combustibles solides en gaz combustibles dans un gazéificateur (transformation totale ou »gazéification totale«, ou partielle appelée »pyrolyse«, »carbonisation« ou »distillation«).

Le terme gazéificateur est utilisé dans un sens général pour désigner les appareils appelés gazogènes ou carbonisateurs ou fours de pyrolyse, de carbonisation ou de distillation, dans lesquels se produit une combustion incomplète et/ou une pyrolyse et/ou une gazéification totale de combustibles solides, minéraux ou végétaux, qui transforment ceux-ci en gaz combustibles qui peuvent être des gaz pauvres (gaz à l'eau et/ou à l'air), des gaz riches ou des gaz de pouvoir calorifique moyen (gaz de pyrolyse).

Les gazéificateurs peuvent être des appareils à lit fixe, à lit fluidisé, en »suspension cyclonique«, à tue tournant ou tout autre type, à chargement de matière continu ou discontinu.

Les gazéificateurs peuvent être fixes ou mobiles sur des véhicules terrestres ou sur des navires.

Les combustibles solides peuvent être par exemple des charbons minéraux, du charbon végétal, du bois, des déchets végétaux etc.

Les comburants utilisés peuvent être de l'air, de l'oxygène pur, des mélanges d'air, d'oxygène, d'eau et de vapeur d'eau.

L'objectif recherché est d'obtenir des gaz combustibles froids et propres avec un débit instantané qui peut varier très rapidement en fonctin des besoins de l'utilisateur, qui peut être, par exemple, un brûleur à gaz ou un moteur thermique. De plus, dans une grande partie des applications, le gaz propre doit être fourni à une pression constante quelles que soient les variations de régime.

La propreté des gaz combustibles délivrés par un gazéificateur de combustibles solides est une condition indispensable pour pouvoir utiliser ceux-ci dans des moteurs thermiques ou des brûleurs sans détériorer ceux-ci et les divers organes à travers lesquels les gaz circulent (canalisations, robinetterie, ventilateurs, etc.)

Or, les gaz combustibles provenant de la gazéification de combustibles solides peuvent contenir notamment des goudrons, des hydrocarbures, des résidus pyroligneux provenant de la distillation du bois, des particules et poussières solides, de la vapeur d'eau. Les goudrons, les hydrocarbures et les résidus pyroligneux se condensent à des températures comprises entre 50° et 400° C selon leur composition.

Un objectif de la présente invention est de procurer des moyens de traitement des gaz sortant d'un gazéificateur de combustibles solides qui permettent de débarrasser ceux-ci de tous les produits condensables et des particules en suspension qu'ils contiennent afin d'obtenir des gaz propres tout en supprimant ou en limitant la consommation d'eau de lavage des gaz et, dans ce dernier cas, en évitant qu'elle soit rejetée mélangée avec les résidus de lavage, ce qui créerait une importante pollution ou nécessiterait un traitement de cette eau sale rendant l'installation complexe et onéreuse, et d'un entretien plus délicat.

Un autre objectif de l'invention est de procurer des moyens de traitement des gaz sortant d'un gazéificateur qui évitent les colmatages de filtres et les encrassements des appareils de traitement par des dépôts de condensats de goudrons, d'hydrocarbures ou de résidus pyroligneux mélangés à des particules solides.

Un autre objectif de l'invention est de débarrasser les gaz de la vapeur d'eau et des gouttelettes d'eau qu'ils entraînent et qui leur confèrent un taux d'humidité élevé qui réduit leur pouvoir calorifique et leur pouvoir détonant.

Un autre objectif de l'invention est de procurer des moyens de traitement des gaz sûrs, qui permettent de maintenir, si cela s'avère utile, les circuits et les appareils contenant du gaz non refroidi à une pression proche de la pression atmosphérique afin d'éviter des fuites de gaz combustible chauds vers l'extérieur et des risques d'explosion, d'incendie ou de pollution de l'air.

Un autre objectif de l'invention est de procurer des moyens qui permettent de gazéifier des combustibles solides en maintenant une pression relative sensiblement constante dans le gazéificateur, réglée à la valeur souhaitée, par exemple proche de zéro par rapport à l'atmosphère.

La publication DE-A-2 701 166 (STEAG A. G.) décrit un procédé et une installation pour épurer les gaz combustibles produits par un gazéificateur de combustibles solides dans lesquels les gaz bruts et chauds subissent un dépoussiérage grossier dans un cyclone puis sont refroidis pour séparer des gaz un mélange de condensats de goudrons et de poussières.

Les brevets FR-A-2 286 873 (FR. C. OTTO et Comp.), DE-B-2 853 989 (METALLGESELL-SCHAFT) et DE-B-1 260 666 (METALLGESELL-SCHAFT) décrivent des installation d'épuration de gaz combustibles par lavage.

Les procédés selon l'invention pour produire des gaz combustibles froids et propres au moyen d'un gazéificateur de combustibles solides, sont du type dans lesquels on refroidit les gaz et on extrait de ceux-ci les condensats de goudrons et les particules en suspension.

Les objectifs de l'invention sont atteints au moyen d'un procédé qui comporte les opérations suivantes:

— on dépoussière les gaz à sec dans un filtre dépoussiéreur après les avoir refroidi dans un premier échangeur à une température comprise entre 150°C et 350°C selon la nature du filtre et des combustibles gazéifiés;

— on refroidit les gaz dans un deuxième échangeur à une première température comprise entre 70°C et 180°C selon la nature des combustibles gazéifiés et on les fait passer dans un séparateur à sec de condensats de goudrons et d'hydrocarbures;

— on refroidit les gaz jusqu'à une deuxième température comprise entre 15°C et 65°C dans un échangeur-refroidisseur servant de condenseur de la vapeur d'eau;

— on sépare l'eau condensée;

— et on filtre à nouveau les gaz dans des filtres à sec.

Une installation selon l'invention est du type comportant un gazéificateur de combustibles solides et des moyens pour épurer les gaz combustibles sortant dudit gazéificateur.

Une installation selon l'invention comporte:

— un séparateur de goudrons et autres produits condensables;

— un échangeur-refroidisseur, qui est situé en amont dudit séparateur et qui comporte des tubes à l'intérieur desquels les gaz chauds circulent;

— un capteur de température placé dans les gaz sortant dudit échangeur-refroidisseur;

— et des moyens commandés par ledit capteur de température pour réguler automatiquement le débit du fluide de refroidissement qui circule dans ledit échangeur-refroidisseur afin de maintenir la température mesurée par le capteur égale à une valeur de consigne.

De préférence, l'échangeur-refroidisseur comporte des tubes verticaux dans lesquels lesdits goudrons et autres produits condensables se condensent et dans lesquels les gaz combustibles circulent de haut en bas.

De préférence, l'échangeur-refroidisseur est un échangeur à air comportant deux étages, situés de part et d'autre d'un filtre dépoussiéreur, chaque étage comportant des tubes verticaux traversés par le gaz combustible et chaque étage comporte une boucle de régulation de la température du gaz combustible qui maintient cette température à une valeur constante réglable dans une plage comprise entre 150°G et 350°C à la sortie du premier étage et entre 70° et 180°C à la sortie du deuxième étage.

Le résultat de l'invention est la production de gaz combustibles froids et propres par gazéification de combustibles solides.

Les gaz combustibles sortant d'une installation selon l'invention peuvent être utilisés, par exemple, pour alimenter un moteur fixe ou un moteur de véhicule ou un brûleur.

Les moyens d'épuration qui sont utilisés les uns après les autres permettent de débarrasser les gaz des particules en suspension, puis des goudrons et autres produits lourds condensables, ensuite de la vapeur d'eau qui peut représenter un volume important et enfin, selon les cas, de façon complémentaire, des poussières très fines, qui n'auraient pas été retenues dans le premier filtre dépoussiéreur. Ces épurations sont effectuées successivement à des températures décroissantes.

La séparation des particules en suspension a lieu à une température supérieure à la température de début de condensation des goudrons les plus lourds, de telle sorte que l'on évite la formation d'une boue constituée par un mélange de particules et de condensats. Avantageusement, cette température est choisie à une valeur comprise entre 150°C et 350°C et maintenue à cette valeur.

On refroidit ensuite les gaz jusqu'à une température bien déterminée selon les cas et la nature des combustibles solides et des produits condensables auxquels ils donnent naissance. Cette température est choisie de telle sorte qu'elle soit suffisamment basse pour que tous les goudrons et autres produits condensables se condensent et suffisamment haute pour qu'ils restent fluides et puissent être récupérés dans le séparateur qui suit le refroidissement. Lorsque cela est possible, on choisit une température supérieure à la température de condensation de la vapeur d'eau compte tenu de la pression afin d'éviter de recueillir un mélange volumineux de goudrons et d'eau. On condense ensuite la vapeur d'eau une température comprise entre 15° et 65°C. Enfin, après séparation de l'eau condensée, on fait passer les gaz secs, selon les cas et de façon complémentaire, à travers un ou plusieurs filtres à sec pour les débarrasser des poussières fines qui n'auraient pas été retenues dans le premier filtre dépoussiéreur.

Une installation selon l'invention permet, grâce aux régulations de pression et de débit qu'elle comporte, d'alimenter des appareils qui consomment les gaz combustibles en répondant aux variations de débit demandées, qui peuvent être très rapides et de grande amplitude, tout en maintenant les paramètres de fonctionnement du gazéificateur à des valeurs optimales et en assurant une bonne sécurité de l'installation.

Les installations selon l'invention sont simples, efficaces sûres et peu onéreuses. La pollution est réduite au maximum car les effluents sortant de l'installations sont uniquement les poussières, les condensats et l'eau contenue dans les gaz combustibles.

La description suivante se réfère aux dessins annexés qui représentent, sans aucun caractère limitatif, un exemple de réalisation d'une installation selon l'invention.

La figure 1 représente schématiquement, l'ensemble d'une installation selon l'invention.

La figure 2 est une coupe transversale d'un échangeur-refroidisseur à eau servant de condenseur, équipant une installation selon l'invention.

La figure 3 est une coupe transversale d'un échangeur-refroidisseur à air équipant une installation selon l'invention.

La figure 4 est une coupe partielle représentant une variante de réalisation de l'échangeur-refroidisseur à eau servant de condenseur selon la figure 2.

La figure 5 représente une variante d'un dispositif de régulation.

La figure 6 représente une vue perspective et éclatée d'un ensemble compact les trois étages de refroidissement et refroidissement/condensation des gaz, le fluide de refroidissement étant de l'air pour les trois étages.

Le repère 1 désigne un gazéificateur de tout type connu, par exemple un gazogène à lit fixe, à lit fluidisé, en suspension cyclonique, à tube tournant ou autre.

Dans l'exemple représenté, il s'agit d'un gazéificateur comportant un dispositif de chargement continu du combustible solide. Le combustible solide, à l'état divisé, est contenu dans un silo ou une trémie 2 qui alimente un dispositif de dosage continu 3 (dispositif de dosage volumétrique, pesage continu sur bandes, ou trémie pesée chargée séquentiellement).

Ce dispositif des dosage continu 3 reçoit une consigne de débit qui permet d'ajuster ou maintenir:

— le débit d'extraction de 2 dans le cas d'un pesage par bande;
— le débit d'extraction de la trémie ou du dispositif de dosage continu lui-même,

ce qui dans les deux cas, ajuste ou maintient le débit de combustible à la valeur de consigne.

Le combustible solide divisé se déverse, directement ou après convoyage, dans le gazéificateur, au travers d'un sas 4 qui peut affecter une forme et une technologie quelconque (écluse rotative, double sas à clapets battants, convoyeur à vis sans fin, ou autres, ou plusieurs de ces organes disposés l'un après l'autre).

Le gazéificateur 1 comporte, en outre, un dispositif d'injection de gaz comburant, par exemple d'air, pouvant comporter un ventilateur ou un surpresseur 6 et un échangeur de préchauffage de comburant 5, dans lequel le gaz comburant circule à contre-courant ou équicourant des gaz chauds sortant du gazéificateur. Pour éviter tout risque de refoulement de gaz par le circuit de gaz comburant, on dispose sur ce circuit, en un point quelconque, par exemple au refoulement de 6, un clapet anti-retour 6a.

Une boucle de régulation comporte un capteur de débit du gaz comburant, par exemple un capteur 7 du type pressostat différentiel associé à un diaphragme ou à un venturi qui mesure le débit sortant du ventilateur 6. Le signal délivré par le capteur 7 modifie le point de consigne du régulateur de débit 3a du dispositif de dosage 3, pour faire varier le rapport entre le débit de combustible et le débit de gaz comburant suivant une loi déterminée, par exemple pour maintenir ce rapport constant.

De plus, le gazéificateur comporte un capteur de pression 8 qui mesure la pression dans le gazéificateur et qui agit sur un dispositif de régulation 6b commandant un registre 6c placé au refoulement (ou éventuellement à l'aspiration) du ventilateur 6 afin de maintenir la pression ou la dépression dans le gazéificateur à une valeur de consigne déterminée.

Le gazéificateur 1 comporte, en outre, un capteur de pression 9 qui commande automatiquement une vanne d'évent motorisée 10 en cas de dépassement d'un seuil de sécurité. La vanne d'évent 10 permet de faire débiter l'installation à atmosphère en cas d'un excès dangereux de pression dans le gazéificateur.

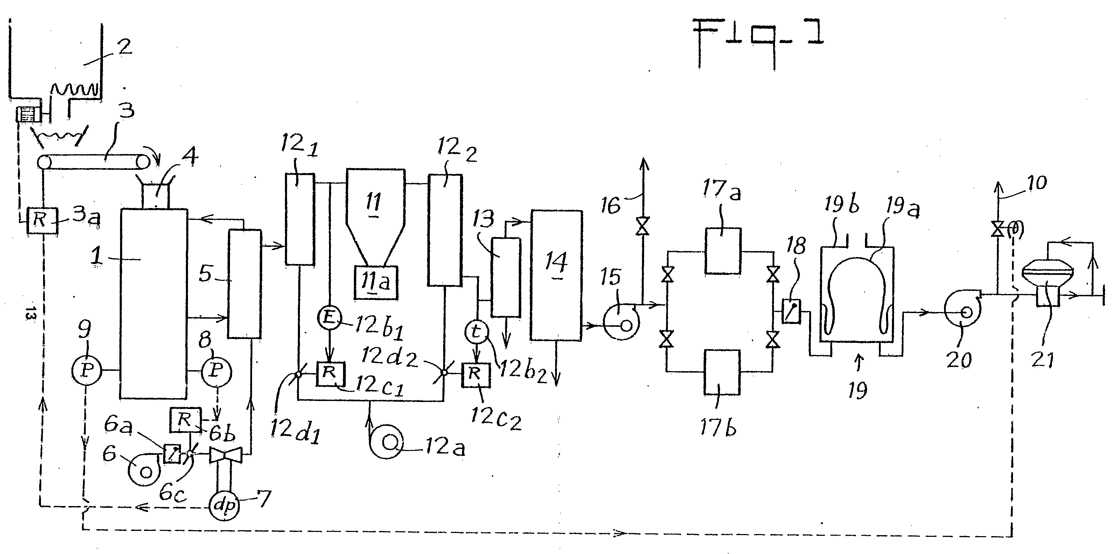

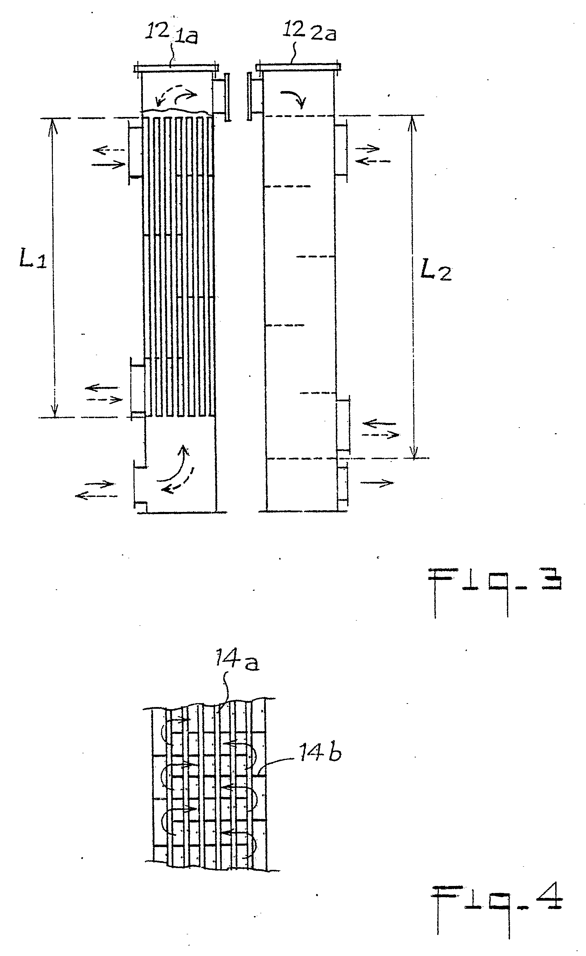

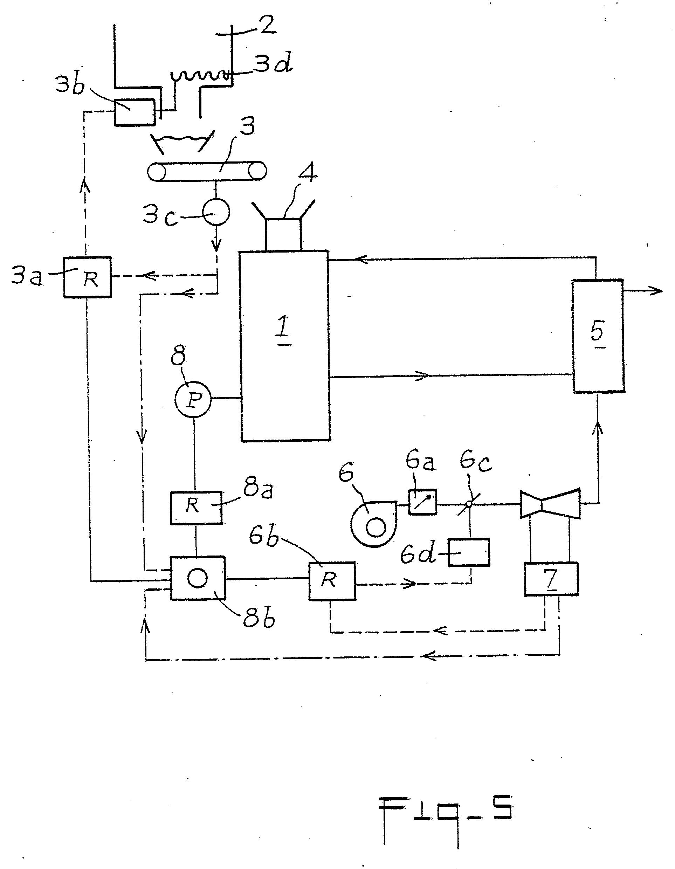

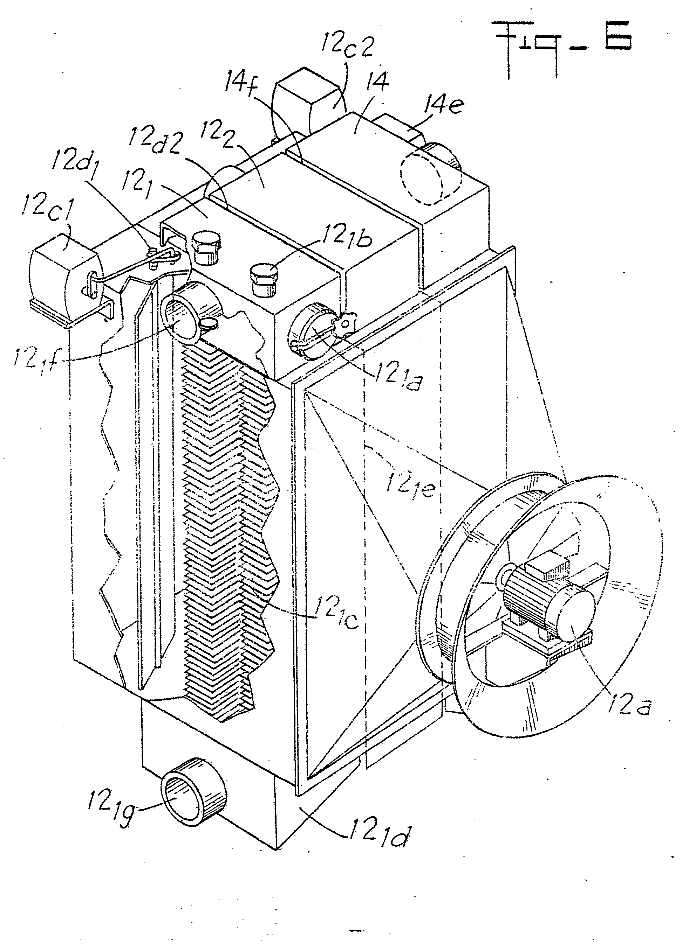

La figure 5 représente une variante d'un dispositif de régulation simultanée du débit de gaz comburant et du débit des combustible alimentant le gazogène 1. Les éléments homologues à ceux de la figure 1 sont représentés par les mêmes repères.

On retrouve sur la figure 5 le ventilateur ou surpresseur 6 qui alimente le gazogène 1 en gaz comburant par l'intermédiaire d'une canalisation de refoulement comportant un clapet de non retour 6a, et une boucle de régulation composée d'un registre 6c associé à un servomoteur ou un actionneur 6d qui est commandé par un régulateur 6b. Le régulateur 6b reçoit une mesure de débit par l'intermédiaire d'un capteur de débit 7 et il compare cette mesure à une valeur de consigne réglable.

On retrouve également sur la figure 5 le sas 4 d'entrée dans le gazogène du combustible solide à l'état divisé. Le combustible est contenu dans une trémie 2, qui est équipée d'un extracteur 3d entraîné par un moteur 3b ou tout autre actionneur équivalent. L'installation comporte un dispositif 3 de dosage continu du débit qui alimente le sas 4. Elle comporte, en outre, une boucle de régulation du débit de combustible, qui est composée d'un capteur 3c qui mesure le débit instantané ou le débit moyen du convoyeur 3 et qui transmet la valeur mesurée à un régulateur 3a qui la compare à une valeur de consigne réglable qui agit sur le moteur 3b, dans le sens qui tend à diminuer l'écart entre le débit mesuré par le capteur 3c et la valeur de consigne.

L'installation de régulation comporte, en outre, un capteur de pression 8 qui mesure la pression dans le gazogène et qui transmet cette mesure à un régulateur général 8a qui la compare à une valeur de consigne réglable et qui émet un signal d'écart vers un opérateur 8b qui reçoit également la mesure de débit de combustible émise par le capteur 3c.

L'opérateur 8b a pour fonction d'élaborer une valeur de consigne qu'il transmet au régulateur de débit de gaz comburant 6b en vue de rétablir la pression voulue dans le gazogène.

Simultanément, l'opérateur 8b élabore une autre valeur de consigne qu'il transmet au régulateur 3a en vue de faire varier le débit de combustible dans le même sens que le débit de gaz comburant tout en maintenant entre les deux valeurs de consigne un écart tel que le gazogène reçoive toujours un débit de combustible excédant légèrement le débit de gaz comburant qui devrait correspondre à la gazéification théorique du débit de combustible.

Le servomoteur $6d$, qui commande le registre $6c$, est un actionneur à came réglable, qui permet d'ajuster expérimentalement le rapport entre le débit de gaz comburant et le débit de combustible aux diverses allures de fonctionnement. Cette régulation simultanée permet d'asservir le débit de gaz comburant et le débit de combustible et de maintenir une pression sensiblement constante dans le gazogène à toutes les allures de fonctionnement.

Les avantages de cette régulation simultanée sont les suivants. Elle évite les retards de réponse globale dans la régulation en fonction des besoins en gaz combustible de l'utilisateur desservi par le gazogène. Elle évite tout décalage entre le débit de combustible et le débit de gaz comburant. Elle permet un réglage automatique du débit de gaz délivré par le gazogène grâce au maintient de la pression interne dans le gazogène à une valeur de consigne qui peut être réglée oisine de zéro, ce qui confère une bonne sécurité de fonctionnement en évitant les fuites de gaz combustible ou les entrées d'air parasites dans le gazogène. Cette régulation permet une variation automatique des paramètres de fonctionnement du gazogène en fonction des besoins en gaz combustible. Elle évite que le gazogène ne risque de fonctionner avec un excès d'air, ce qui entraînerait un excès de température.

Les circuits des automatismes de régulation et de sécurité sont représentés en pointillés sur les figures 1 et 5.

Dans les exemples représentés, le gazéificateur est du type à chargement de combustible continu, mais bien entendu, il pourrait être également du type à chargement de combustible discontinu, et, dans ce cas, les éléments 2, 3, 3a, 3b, 3c, 3d et 7 n'existent pas. Le égazéificateur est alors alimenté de façon discontinue et séquentielle par un convoyeur quelconque de combustible solide déversant celui-ci dans le sas 4 qui peut être constitué d'une simple porte ou d'un volume avec double obturation par portes, clapets, vannes à tiroirs ou autres systèmes. Cette alimentation discontinue peut être manuelle ou automatisée, par exemple en fonction d'une mesure de la quantité de combustible contenue dans le gazéificateur (mesure de niveau ou autre).

Les gaz combustibles sortant du gazéificateur traversent optionnellement un échangeur 5 qui préchauffe le gaz comburant avant qu'il pénètre dans le gazéificateur. La sortie de l'échangeur 5 est connectée sur l'entrée du premier étage $12_1$ d'un deuxième échangeur qui comporte un deuxième étage $12_2$. Un filtre dépoussiéreur 11 est disposé entre les deux étages $12_1$ et $12_2$. Le filtre 11 comporte, à l'extrémité inférieure, une boîte ou un bac à cendres 11a ou tout autre dispositif équivalent, à un ou plusieurs étages, permettant d'extraire les particules séparées, en continu ou en discontinu. De préférence, le filtre dépoussiéreur 11 est calorifugé.

Lors de leur passage à travers les échangeurs $12_1$ et $12_2$, les gaz combustibles sont refroidis par un fluide de refroidissement, par exemple par de l'air frais qui est refoulé par un ventilateur 12a alimentant les deux échangeurs en parallèle.

Les canalisations de refoulement comportent chacune un registre motorisé $12d1$ et $12d2$ qui est commandé par un régulateur de débit $12c1$ et $12c2$. Ces registres, représentés en amont de $12_1$ et $12_2$, peuvent également, selon les cas, être disposés en aval de $12_1$ et $12_2$.

Un capteur de température $12b1$ mesure la température du gaz combustible à la sortie du premier étage $12_1$ et transmet la mesure au régulateur $12c1$ qui compare la température à une valeur de consigne comprise entre 150°C et 350°C, selon la nature du filtre et des combustibles. Le régulateur $12c1$ commande automatiquement le registre $12d1$ pour maintenir la température des gaz à l'entrée du filtre 11 égale à la valeur de consigne. Cette valeur de consigne est supérieure à la température de condensation des goudrons en produits hydrocarbures ou autres apparaissant dans les gaz combustibles, ce qui évite la formation de boues dans le filtre 11.

Le filtre dépoussiéreur 11 permet d'extraire à sec la plus grande partie des particules en suspension dans les gaz combustibles sortant du gazéificateur.

Le filtre 11 peut être de tout type, par exemple à manchons ou cartouches filtrantes, en tissus, en matières fibreuses synthétiques tissées ou non tissée, en fils métalliques, en céramique tissée ou solide poreuse, à effet cyclonique etc. ou une combinaison de ces différentes technologies ou d'autres. Le filtre 11 peut comporter un ou plusieurs compartiments commutables manuellement ou automatiquement en fonction par exemple de la mesure de la perte de charge à la traversée du filtre.

Le registre motorisé $12d2$ est commandé automatiquement par un deuxième régulateur $12c2$ qui reçoit une information de température des gaz combustibles miusurée par un capteur de température $12b2$ situé à la sortie du deuxième étage $12_2$.

Le régulateur R maintient la température du gaz combustible sortant du deuxième étage $12_2$ à une température constante qui se situe dans une plage comprise entre 70°C et 180°C.

Le deuxième étage $12_2$ comporte des tubes échangeurs verticaux qui sont parcourus par le gaz combustible, de préférence de haut en bas, de sorte que l'écoulement vers le bas des condensats de goudrons, qui peuvent se déposer sur les parois des tubes, est favorisé par le sens d'écoulement des gaz.

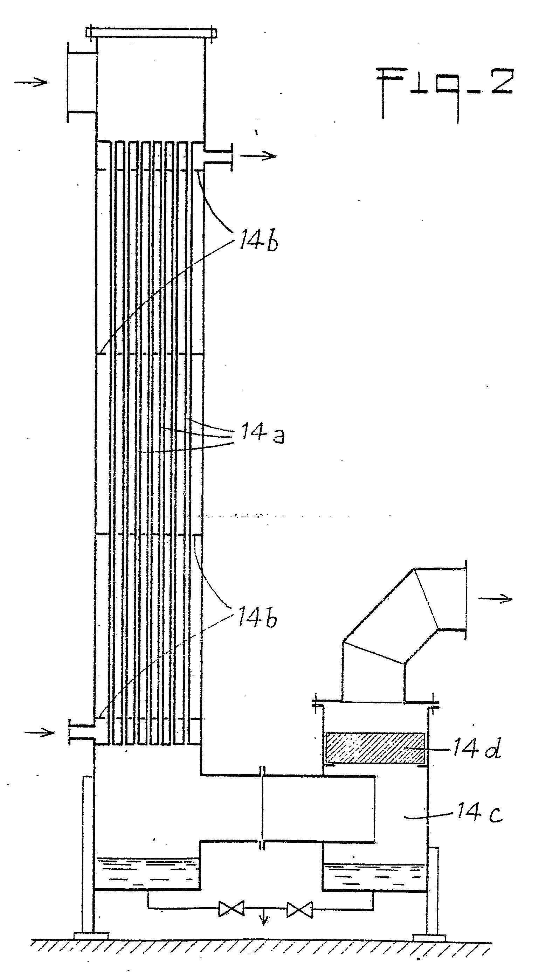

La figure 3 représente, à plus grande échelle, un exemple de réalisation d'un échangeur refroidisseur à deux étages, un premier étage $12_1$ ou

les gaz circulent dans des tubes verticaux de bas en haut ou de haut en bas selon les cas et un deuxième étage $12_2$ à la sortie duquel la température du gaz combustible est suffisamment basse pour que des condensations risquent de se produire dans les tubes qui sont parcourus par le gaz combustible de haut en bas.

Les longueurs L1 et L2 des tubes des deux étages ne sont pas nécessairement égal. Les tubes sont facilement nettoyables après démontage de deux couvercles amovibles $12_{1a}$ et $12_{2a}$ qui obturent l'extrémité supérieure des échangeurs. Le filtre dépoussiéreur 11 n'est pas représenté sur la figure 3.

Dans le cas où les échangeurs $12_1$ et $12_2$ sont refroidis par de l'air circulant à équicourant ou à contre-courant, l'air de refroidissement réchauffé peut être utilisé pour sécher les combustibles solides avant de les introduire dans le gazéificateur ou pour alimenter en aire de combustion préchauffé des brûleurs qui sont alimentés en combustible par le gaz sortant de l'installation.

Dans le cas où l'installation ne comporte pas un échangeur 5 de préchauffage du gaz comburant, l'air réchauffé sortant des échangeurs $12_1$ et $12_2$ peut être utilisé, en totalité ou en partie comme gaz comburant du gazéificateur.

Bien entendu, les deux étages échangeurs $12_1$ et $12_2$, alimentés en parallèle par un même ventilateur ou éventuellement par deux circuits de ventilation indépendants, pourraient être remplacés par deux échangeurs totalement indépendants, qui seraient parcourus par les gaz combustibles, l'un avant passage par le filtre dépoussiéreur 11 et l'autre, après dépoussiérage.

La sortie de l'échangeur $12_2$ est connectée sur un appareil séparateur des gouttelettes de condensats entraînées par le gaz, qui sont principalement des gouttelettes de goudron ou hydrocarbures. Ce séparateur fonctionne sans aucun appoint d'eau ou d'un autre liquide quelconque. Le séparateur 13 comporte, à la partie inférieure, une capacité qui reçoit les condensats et qui permet de las extraire périodiquement ou en continu. Avantageusement, le séparateur 13 est calorifugé. Le séparateur 13 peut être par exemple un appareil de séparation par centrifugation ou par effet de cyclone. Ce peut être également un appareil de séparation par chocs ou un dévésiculeur à mailles métalliques ou un séparateur comportant une partie mobile vibrante ou tournante entraînée par un moteur ou un appareil, ensemble, ces différentes techniques ou encore tout autre type de séparateur à sec c'est-à-dire sans appoint d'un fluide de lavage.

La sortie du séparateur 13 est connectée sur un échangeur refroidisseur servant de condenseur 14 qui peut être de type quelconque, avec ou sans contact direct avec un fluide froid, par exemple un échangeur gaz-air ou encore gaz-eau dans lequel l'eau froide circule pour refroidir les gaz à une température t2 comprise entre 15° et 65°C, de telle sorte que la vapeur d'eau contenue dans les gaz combustibles se condense en partie ou en totalité selon la température de sortie.

La figure 2 représente un mode de réalisation préférentiel d'un échangeur-refroidisseur gaz-eau servant de condenseur 14 comportant des tubes verticaux 14a parcourus de haut en bas par le gaz, à l'extérieur desquels circule l'eau de refroidissement de bas en haut, répartie correctement par son écoulement grâce à des chicanes de répartition 14b. Ces chicanes peuvent être disposées pour répartir le débit d'eau annulairement autour des tubes 14a ou pour réaliser une circulation d'eau alternée perpendiculairement à l'axe des tubes 14a (voir figure 4).

La partie tubulaire est suivie d'un dispositif de séparation des gouttes d'eau 14c évitant l'entraînement des gouttelettes d'eau condensée comprenant, par exemple, une arrivée tangentielle des gaz et un matelas métallique à séparation par choc 14d.

La zone inférieure des deux corps sert de réservoir à eau condensée et comporte une purge manuelle ou automatique.

Un accès facile à l'intérieur des tubes s'effectue par le couvercle supérieur démontable, de forme quelconque.

A titre d'exemple, la température d'entrée des gaz peut être de 120°C, la température de sortie de 40°C.

Bien entendu, l'eau pourrait être remplacée par un autre fluide de ramplacement air par exemple, ou autre. Dans le cas d'un échangeur à eau, l'eau réchauffée sortant de l'échangeur peut être utilisée pour en récupérer les calories ou rejetée. Le débit est faible et cette eau est propre, donc il n'y a aucun risque de pollution chimique ou thermique. Bien entendu, l'eau réchauffée peut également être recyclée dans un réfrigérant atmosphérique à condensation ou non, ou un échangeur quelconque.

La sortie du condenseur 14 est connectée de préférence, en particulier si le gazéificateur n'a une pression positive, sur l'aspiration d'un ou plusieurs ventilateurs ou surpresseurs 15 qui assurent la circulation des gaz à travers toute l'installation. Du fait que le gazéificateur 1 est placé entre deux ventilateurs 15 et 6, on peut réguler automatiquement le débit du ventilateur 6 pour maintenir, si on le désire, une pression sensiblement constante dans le gazéificateur, réglée à la valeur choisie.

Le refoulement du ventilateur 15 est raccordé à un évent de démarrage 16 muni d'une vanne qui est ouverte pendant le démarrage et le préchauffage de l'installation, de sorte que les gaz sortent par l'évent sans traverser les appareils suivants et, en particulier, le filtre en service.

Le refoulement du ventilateur 15 est connecté sur une batterie de deux filtres 17a et 17b, montés en parallèle avec des vannes d'isolement manuelles ou automatisées, permettant d'isoler un filtre pour le nettoyer ou remplacer l'élément filtrant.

La commutation d'un filtre à l'autre peut être commandée automatiquement par un capteur de pression différentielle qui mesure la perte de charge à travers le filtre qui est en fonctionnement. Les filtres 17a et 17b sont des filtres qui fonctionnent à sec, par exemple des filtres à manchons ou à cartouches filtrantes en tissu ou en toute autre matière filtrante équivalente ou tout autre filtre à sec équivalent.

La sortie des filtres est connectée à travers un clapet anti-retour 18, sur un réservoir tampon 19.

Le réservoir tampon 19 est du type à volume variable. Il peut être réalisé sous la forme d'un gazomètre à chloche mobile et joint hydraulique ou toute autre technique (capacité souple par exemple ou autre).

Sur l'exemple choisi, le réservoir 19 est du type réservoir à membrane déformable 19a. Il comporte, de préférence, une enveloppe extérieure de sécurité 19b.

Les gaz stockés dans le réservoir 19 sont maintenus à la pression du circuit de gaz tant que celle-ci est supérieure ou égale à une pression de tarage, pression minimum au-dessous de laquelle le réservoir se vide, obtenue par exemple par le poids de la chloche (gazomètre à cloche), par des poids, par la pression d'un ventilateur à air s'exerçant sur la face externe de la membrane 19a ou par la pression atmosphérique si la pression de tarage est égale à celle-ci (réservoir à membrane déformable).

Dans le cas du réservoir à membrane déformable, et tel que représenté sur le schéma 1, 1a face externe de la membrane est simplement mise en communication avec la pression atmosphérique, sans utilisation de poids ou de ventilateur de tarage.

Le tarage est égal à la pression atmosphérique et le réservoir 19 se vide si la pression des gaz descend au-dessous de la pression atmosphérique.

Le volume maximum du réservoir tampon 19 doit être déterminé en fonction de la variation maximum instantannée des besoins en gaz, mais celle-ci est souvent très importante.

De ce fait, le volume nécessaire dépend de l'inertie de l'installation productrice de gaz et donc tout particulièrement de l'inertie du gazéificateur et des temps de réponse des dispositifs de régulation de débit de comburant et éventuellement du débit de combustible, selon les figures 1 et 5.

A la sortie du réservoir d'accumulation 19, l'installation peut comporter éventuellement, mais non nécessairement, un ventilateur ou surpresseur de gaz 20.

On trouve disposé ensuite l'évent 10 précédemment décrit, qui permet de débiter les gaz à l'atmosphère en cas d'excès de pression dans le gazogène.

Il peut être connecté ensuite sur un dipositif de régulation de pression 21 qui délivre des gaz à pression constante qui peut être supérieure, égale ou inférieure à la pression atmosphérique, quelle que soit la demande de gaz et quelle que soit la pression à l'amont pourvu évidemment que celle-ci soit supérieure à la pression à l'aval. Par exemple, le régulateur 21 est un détendeur dit à zéro qui délivre une pression légèrement inférieure à la pression atmosphérique et qui se ferme automatiquement lorsqu'il n'y a plus aucune demande de gaz.

La description de l'installation ne comporte pas toutes les vannes de sectionnement, isolement, by-pass, robinets sur fluides, accessoires de robinetterie, pour des raisons de meilleure compréhension.

La figure 6 représente, en vue perspective et partiellement éclatée, un ensemble compact réunissant les trois étages de refroidissement de gaz: échangeurs-refroidisseurs $12_1$ et $12_2$ et échangeur-refroidisseur à air servant de condenseur 14.

L'étage $12_1$ est composé:

— d'un collecteur d'entrée, de préférence supérieur, $12_{1a}$, de forme quelconque, pouvant recevoir une porte ou tape de nettoyage et, s'il n'est pas lui-même démontable, de bouchons de nettoyage $12_{1b}$, sur lequel est raccordée, à un emplacement quelconque optimal, l'entrée de gaz $12_{1f}$, de section de forme quelconque;

— de tubes verticaux $12_{1c}$, de préférence à ailettes de forme quelconque, traversés intérieurement par le gaz, de préférence de haut en bas;

— d'un collecteur de sortie, de préférence inférieur, $12_{1d}$ de forme quelconque, qui peut être choisie pour évacuer les poussières, pouvant recevoir une porte ou tape de nettoyage ou des bouchons de nettoyage (ou les deux), sur lequel est raccordée, à un emplacement quelconque optimal, la sortie de gaz $12_{1g}$ vers 11, de section de forme quelconque.

— d'une cloison de compartimentage $12_{1e}$ séparant l'écoulement d'air de refroidissement circulant à l'extérieur des tubes verticaux $12_{1c}$, soufflé ou aspiré par le moto-ventilateur 12a hélicoïde ou centrifuge, commun aux tois étages $12_1$, $12_2$ et 14, de l'air s'écoulant dans les deux autres étages $12_2$ et 14;

— d'un volet de réglage du débit d'air de refroidissement $12_{d1}$, de préférence à axe vertical, manoeuvré par un actionneur quelconque représenté en $12_{c1}$;

— avantageusement, et si cela est utile selon les cas, d'une hotte ou gaine permettant de collecter l'air chaud de refroidissement (non représentée).

L'étage $12_1$ peut avoir une forme, une taille, une position ou un raccordement différent de celui représenté, tout en conservant le même principe.

Les étages $12_2$ et 14 sont composés des mêmes éléments que l'étage $12_1$. Leur ordre (de gauche à droite) peut être quelconque.

Ils sont également à tubes verticaux traversés, de préférence de haut en bas par les gaz. Le nombre tubes et le diamètre des tubes de chaque étage sont généralement différents.

L'étage 14 peut, de préférence, sans que cela soit impératif, comprendre aussi un volet 14f et un actionneur 14e.

L'ensemble constitue un échangeur compact à trois étages nettoyable, léger, à faible coût, à faible consommation énergétique du fait de la faible perte de charge sur les circuits de refroidissement supprimant les tuyauteries de raccordement de refroidissement, et constituant un mode de réalisation avantageux de l'installation précédemment décrite.

Le fonctionnement est le suivant.

Les gaz sortant du gazéificateur 1 sont traités à sec, dont l'installation ne produit pas de l'eau polluée, difficile à évacuer ou à épurer.

Les gaz sont débarrassés successivement des particules en suspension dans le filtre dépoussiéreur 11, des liquides condensables tels que goudrons, hydrocarbures ou résidus pyroligneux dans le séparateur 13, de l'eau condensée dans le condenseur 14 et des poussières très fines qui n'auraient pas été retenues dans le premier filtre dépoussiéreur, à travers le ou les filtres 17.

Le filtrage-dépoussiérage préalable a lieu dans des conditions optimals du fait qu'il est réalisé à une température qui est maintenue constante à une valeur optimale évitant les dépôts liquides.

La séparation des goudrons a lieu dans les conditions optimales du fait qu'elle est réalisée à une température qui est maintenue constante, à une valeur optimale. Les condensats de goudrons et autres résidus condensables ne sont pas mélangés à l'eau condensée, qui peut représenter des quantités importantes, et il est donc plus facile de se débarrasser de ces résidus, par exemple en les brûlant à haute température.

Le gazéificateur peut être maintenu, si nécessaire, à pression constante quel que soit le débit de gaz demandé par l'utilisateur et la variation de perte de charge des divers appareils de l'installation.

Le gaz combustible est délivré par une installation selon l'invention à pression constante quels que soient les besoins.

Dans le cas d'un gazéificateur 1 comportant une alimentation continue en combustible peut varier en fonction du débit de comburant entrant dans l'appareil suivant une loi déterminée par exemple dans un rapport constant ou toute autre loi, ou, en variante, les débits de combustible et de comburant peuvent varier simultanément et suivant une loi déterminée entre eux en fonction des besoins en gaz ou de la pression interne du gazéificateur, avec contrôle de l'écart combustible/comburant pour éviter tout risque d'excès d'air.

Les trois étages de refroidissement $12_1$, $12_2$ et 14 peuvent être réalisés de façon comptacte et économique comme représenté sur la figure 6.

## Revendications

1. Procédé pour produire des gaz combustibles froids et propres au moyen d'un gazéificateur de combustibles solides du type dans lequel on refroidit les gaz et on extrait de ceux-ci les condensats de goudrons et les particules en suspension, caractérisé en ce que:

- on dépoussière les gaz à sec dans un filtre dépoussiéreur (11) après les avoir refroidi dans un premier échangeur ($12_1$) à une température (t0) comprise entre 150° et 350°C, selon la nature du filtre et des combustibles gazéifiés;
- on refroidit les gaz dans un deuxième échangeur ($12_2$) à une première température (t1) comprise entre 70°C et 180°C, selon la nature des combustibles gazéifiés et on les fait passer dans un séparateur à sec (13) de condensates de goudrons et d'hydrocarbures;
- on refroidit les gaz jusqu'à une deuxième température (t2) comprise entre 15°C et 65°C dans un échangeur-refroidisseur (14) servant de condenseur de la vapeur d'eau;
- on sépare l'eau condensée;
- et on filtre à nouveau les gaz dans des filtres à sec (17a, 17b).

2. Installation pour produire des gaz combustibles froids et propres du type comportant un gazéificateur (1) de combustibles solides et des moyens pour épurer les gaz combustible sortant dudit gazéificateur, caractérisée en ce qu'elle comporte:

- un séparateur (13) de goudrons et autres produits condensables;
- un échangeur-refroidisseur ($12_1$, $12_2$), qui est situé en amont dudit séparateur (13) et qui comporte des tubes à l'intérieur desquels les gaz chauds circulent;
- un capteur de température ($12b_2$) placé dans les gaz sortant dudit échangeur-refroidisseur;
- et des moyens ($12c_2$, $12d_2$) commandés par ledit capteur de température pour réguler automatiquement le débit du fluide de refroidissement qui circule dans ledit échangeur-refroidisseur afin de maintenir la température (t1) mesurée par ledit capteur constante et égale à une valeur de consigne.

3. Installation selon la revendication 2, caractérisée en ce que ledit échangeur-refroidisseur est un échangeur à air comportant deux étages ($12_1$ et $12_2$) situés de part et d'autre d'un filtre dépoussiéreur (11), chaque étage comportant des tubes verticaux traversés par le gaz combustible et chaque étage comporte une boucle de régulation de la température du gaz combustible qui maintient cette température à une valeur constante réglable dans une plage comprise entre 150°C et 350°C à la sortie du premier étage et entre 70° et 180°C à la sortie du deuxième étage.

4. Installation selon l'une quelconque des revendications 2 et 3, caractérisée en ce que ledit échangeur-refroidisseur (12) est un échangeur à air et l'air chaud sortant dudit échangeur sert à sécher ou parfaire le séchage des combustibles solides avant leur introduction dans le gazéificateur, ou est utilisé comme air de combustion préchauffé pour alimenter un ou plusieurs brûleurs utilisant les gaz combustibles sortant de l'installation.

5. Installation selon l'une quelconque des revendications 2 à 4, caractérisée en ce qu'elle comporte, en outre, un échangeur-refroidisseur (14) servant de condenseur de la vapeur d'eau contenue dans les gaz combustibles associé à un séparateur (14c, 14d) situé en aval dudit condenseur.

6. Installation selon la revendication 5, caractérisée en ce que ledit échangeur-refroidisseur servant de condenseur comporte des tubes verticaux (14a) dans lesquels les gaz circulent de haut en bas, à l'extérieur desquels circule de l'eau de bas en haut, répartie correctement grâce à des chicanes (14b), répartissant annulairement le débit d'eau autour de chaque tube ou réalisant une circulation d'eau alternée perpendiculairement à l'axe des tubes, et équipé, à la sortie de gaz, d'un dispositif (14c) de séparation des gouttes d'eau.

7. Installation selon la revendication 5, caractérisée en ce que les trois échangeurs refroidisseurs $(12_1, 12_2$ et 14) sont des échangeurs tubulaires gaz/air, le gaz circulant à l'intérieur des tubes, réalisés sous la forme d'un ensemble compact en trois parties accolées, séparées par des cloisons comprenant chacune des tubes verticaux $(12_{1c})$ raccordés à un collecteur d'entrée et de sortie $(12_{1a}, 12_{1d})$, nettoyables, un volet de réglage de débit d'air de refroidissement à axe vertical $(12_{d1})$ entraîné par un actionneur $(12_{c1})$, les trois circuits d'air étant raccordés au refoulement ou à l'aspiration d'un même ventilateur (12a).

8. Installation selon l'une quelconque des revendications 2 à 7, caractérisée en ce qu'elle comporte:

— un premier ventilateur (15) qui aspire les gaz combustibles sortant du gazéificateur (1);
— un dispositif de dosage continu des combustibles solides (3) équipé d'une boucle de régulation de débit (3a, 3b, 3c) comportant un premier régulateur (3a);
— un dispositif d'alimentation en gaz comburant (6, 6a) équipé d'une boucle de régulation de débit (6c, 6d, 7) comportant un deuxième régulateur (6b);
— un capteur de pression (8) qui mesure la pression dans le gazéificateur et qui est connecté sur un troisième régulateur (8a);
— et un opérateur (8b) qui reçoit une mesure de débit de combustible émise par un capteur (3c) et un signal émis par le troisième régulateur (8a) et qui émet une première valeur de consigne vers le premier régulateur (3a) et une deuxième valeur de consigne vers le deuxième régulateur (6b), ces deux valeurs de consigne étant telles que le débit de combustible excède légèrement le débit de gaz comburant nécessaire à la gazéification théorique du débit de combustible.

9. Installation selon la revendication 8, caractérisée en ce qu'elle comporte, sur le circuit de gaz, après refroidissement de ceux-ci, un réservoir tampon (19) de gaz froids à volume interne variable, le volume des gaz étant maintenu à la pression du circuit de gaz, et en tous cas au moins égal à une pression de tarage quelconque s'exerçant par un moyen quelconque sur le volume variable, le volume maximum interne dudit réservoir tampon étant déterminé et choisi en fonction du temps de réponse du gazéificateur et des dispositifs de régulation du débit de comburant et, éventuellement, du débit de combustible solide, et ledit réservoir tampon (19) comportant une membrane déformable (19a) et une enveloppe de sécurité (19b).

10. Installation selon l'une quelconque des revendications 2 à 9, caractérisée en ce qu'elle comporte, à la sortie un détendeux dit à zéro, qui délivre les gaz sous une pression constante légèrement inférieure à la pression atmosphérique, quelle que soit la pression amont, et qui se ferme automatiquement lorsque la demande de gaz combustible à l'aval du détendeur est nulle.

## Patentansprüche

1. Verfahren zur Herstellung von kalten und reinen Brenngasen mittels eines Vergasers für feste Brennstoffe, bei welchem Verfahren die Gase gekühlt und aus ihnen die Teerkondensate und die in Suspension befindlichen Teilchen extrahiert werden, dadurch gekennzeichnet, daß

— die Gase in einem Entstaubungsfilter (11) nach Abkühlen in einem ersten Austauscher $(12_1)$ auf eine Temperatur $(t_0)$ zwischen 150° und 350°C, je nach Beschaffenheit des Filters und der vergasten Brennstoffe, trocken entstaubt werden;
— die Gase in einem zweiten Austauscher $(12_2)$ auf eine erste Temperatur $(t_1)$ zwischen 70° und 180°C, je nach Beschaffenheit der vergasten Brennstoffe, abgekühlt und durch einen Trockenabscheider (13) für Teerkondensate und Kohlenwasserstoffe geschickt werden;
— die Gase in einem als Wasserdampfkondensator dienenden Austauscher-Kühler (14) auf eine zweite Temperatur $(t_2)$ zwischen 15° und 65°C abgekühlt werden;
— das Kondenswasser abgetrennt wird;
— und die Gase neuerlich in Trockenfiltern (17a, 17b) gefiltert werden.

2. Vorrichtung zur Herstellung von kalten und reinen Brenngasen mit einem Vergaser (1) für feste Brennstoffe und Mitteln zum Reinigen der aus dem Vergaser kommenden Brenngase, dadurch gekennzeichnet, daß sie folgendes umfaßt:

— einen Abscheider (13) für Teere und andere kondensierbare Produkte;
— einen Austauscher-Kühler (12$_1$, 12$_2$), der stromaufwärts vom Abscheider (13) angeordnet ist und Rohre umfaßt, in deren Innerem die heißen Gase zirkulieren;
— einen in den aus dem Austauscher-Kühler kommenden Gasen befindlichen Temperaturfühler (12b$_2$);
— und Mittel (12c$_2$, 12d$_2$) zur automatischen Regelung der Durchflußmenge des im Austauscher-Kühler zirkulierenden Kühlmediums zwecks Konstanthaltens der vom Fühler gemessenen Temperatur (t$_1$) auf einem Einstellwert, welche Mittel vom Temperaturfühler gesteuert sind.

3. Vorrichtung nach Anspruch 2, dadurch gekennzeichnet, daß der Austauscher-Kühler ein Luftaustauscher mit zwei beiderseits eines Entstaubungsfilters (11) angeordneten Stufen (12$_1$ und 12$_2$) ist, wobei jede Stufe vertikale, vom Brenngas durchströmte Rohre und einen Temperaturregelkreis für das Brenngas umfaßt, der diese Temperatur auf einem innerhalb eines Bereichs zwischen 150° und 350° C am Ausgang der ersten Stufe und zwischen 70° und 180° C am Ausgang der zweiten Stufe regelbaren Wert konstant hält.

4. Vorrichtung nach einem der Ansprüche 2 und 3, dadurch gekennzeichnet, daß der Austauscher-Kühler (12) ein Luftaustauscher ist und die aus dem Austauscher kommende Heißluft zum Trocknen oder Fertigtrocknen der festen Brennstoffe vor ihrem Einbringen in den Vergaser dient oder als vorgewärmte Verbrennungsluft zur Speisung eines oder mehrerer die aus der Vorrichtung kommenden Brenngase nützenden Brenner(s) verwendet wird.

5. Vorrichtung nach einem der Ansprüche 2 bis 4, dadurch gekennzeichnet, daß sie weiters einen Austauscher-Kühler (14) umfaßt, der als Kondensator für den in den Brenngasen enthaltenen Wasserdampf dient und mit einem stromabwärts des Kondensators angeordneten Abscheider (14c, 14d) verbunden ist.

6. Vorrichtung nach Anspruch 5, dadurch gekennzeichnet, daß der als Kondensator dienende Austauscher-Kühler vertikale Rohre (14a) umfaßt, in denen die Gase von oben nach unten zirkulieren und außerhalb welcher Wasser, mittels Schikanen (14b) richtig verteilt, von unten nach oben zirkuliert, welche Schikanen den Wasserdurchfluß um jedes Rohr ringförmig verteilen oder eine alternierende Zirkulation des Wassers senkrecht zu den Rohrachsen bewirken, und daß er am Gasauslaß mit einer Einrichtung (14c) zum Abtrennen der Wassertropfen ausgestattet ist.

7. Vorrichtung nach Anspruch 5, dadurch gekennzeichnet, daß die drei Austauscher-Kühler (12$_1$, 12$_2$ und 14) rohrförmige Gas/Luft-Austauscher sind, wobei das Gas im Inneren der Rohre zirkuliert, und als kompakte Einheit aus drei aneinandergebauten, durch Trennwände getrennten Teilen hergestellt sind, von denen jeder vertikale Rohre (12$_{1c}$) enthält, die an einen reinigbaren Eingangskollektor (12$_{1a}$) und einen reinigbaren Ausgangskollektor (12$_{1d}$) angeschlossen sind, wobei eine Klappe zur Regelung der Kühlluft-Durchflußmenge mit vertikaler Achse (12$_{d1}$) durch ein Betätigungsmittel (12$_{c1}$) angetrieben ist und die drei Luftkreisläufe an die Druck- oder Saugseite desselben Ventilators (12a) angeschlossen wird.

8. Vorrichtung nach einem der Ansprüche 2 bis 7, dadurch gekennzeichnet, daß sie folgendes umfaßt:

— einen ersten Ventilator (15), der die aus dem Vergaser (1) kommenden Brenngase ansaugt;
— eine Einrichtung (3) zum kontinuierlichen Dosieren der festen Brennstoffe mit einem Mengenregelkreis (3a, 3b, 3c), der einen ersten Regler (3a) umfaßt;
— eine Einrichtung (6, 6a) zur Einspeisung von die Verbrennung bewirkendem Gas mit einem Mengenregelkreis, (6c, 6d, 7), welcher einen zweiten Regler (6b) umfaßt;
— einen Druckfühler (8), der den Druck im Vergaser mißt und an einen dritten Regler (8a) angeschlossen ist;
— und einen Operator (8b), der einen von einem Fühler (3c) emittierten Meßwert für die Brennstoffdurchsatzmenge und ein vom dritten Regler (8a) emittiertes Signal empfängt und der einen ersten Einstellwert zum ersten Regler (3a) und einen zweiten Einstellwert zum zweiten Regler (6b) entsendet, welche beiden Einstellwerte derart sind, daß die Durchsatzmenge des Brennstoffs die Durchflußmenge des zum Vergasen der Durchsatzmenge an Brennstoff theoretisch notwendigen, die Verbrennung bewirkenden Gases geringfügig übersteigt.

9. Vorrichtung nach Anspruch 8, dadurch gekennzeichnet, daß sie im Kreislauf des Gases nach Abkühlen desselben einen Zwischenbehälter (19) für kalte Gase mit variablem Innenvolumen umfaßt, wobei das Volumen der Gase auf dem Druck des Gaskreislaufs und auf jeden Fall zumindest gleich irgendeinem durch irgendein Mittel auf das variable Volumen ausgeübten Bezugsdruck gehalten wird, wobei das maximale Innenvolumen des Zwischenbehälters als Funktion der Reaktionszeit des Vergasers und der Einrichtungen zum Regulieren der Durchflußmenge an die Verbrennung bewirkendem Mittel und gegebenenfalls der Durchsatzmenge an festem Brennstoff bestimmt und gewählt wird, welcher Zwischenbehälter (19) eine verformbare Membran (19a) und eine Sicherheitshülle (19b) umfaßt.

10. Vorrichtung nach einem der Ansprüche 2 bis 9, dadurch gekennzeichnet, daß sie am Ausgang einen Druckminderer auf Null umfaßt, der die Gase unter einem konstanten Druck der etwas niedriger als der atmosphärische Druck ist, unabhängig vom stromaufwärts herrschenden Druck, abgibt und sich automatisch schließt, wenn kein Bedarf an Brenngas stromabwärts vom Druckminderer besteht.

**Claims**

1. Process for producing cold, clean combustible gases by means of a gasifier of solid fuels of the type in which the gases are cooled and the condensates of tars and the particles in suspension are extracted therefrom, characterized in that:

— the dust is removed form the gases, dry, in a dust-removing filter (11) after having cooled the gases in a first exchanger ($12_1$) to a temperature (t0) included between 150° and 350° C, depending on the nature of the filter and the gasified fuels;

— the gases are cooled in a second exchanger ($12_2$) to a first temperature t1 included between 70° and 180° C, depending on the nature of the gasified fuels and they are passed in a dry separator (13) of condensates of tars and hydrocarbons;

— the gases are cooled up to a second temperature (t2) included between 15° and 65° C in an exchanger-cooler 14 serving as water vapour condenser;

— the condensed water is separated;

— and the gases are filtered again in dry filters (17a, 17b).

2. Installation for producing cold, clean combustible gases of the type comprising a gasifier (1) of solid fuels and means for purifying the combustible gases emerging from said gasifier, characterized in that it comprises:

— a separator (13) of tars and other condensable products;

— an exchanger-cooler ($12_1$, $12_2$) which is located upstream of said separator (13) and which comprises tubes inside which the hot gases circulate;

— a temperature sensor ($12b_2$) placed in the gases emerging from said exchanger-cooler;

— and means ($12c_2$, $12d_2$) controlled by said temperature sensor in order automatically to regulate the rate of flow of the cooling fluid which circulates in said exchanger-cooler in order to maintain the temperature (t1) measured by said sensor constant and equal to a reference value.

3. Installation according to Claim 2, characterized in that said exchanger-cooler is an air exchanger comprising two stages ($12_1$ and $12_2$) located on either side of a dust removing filter (11), each stage comprising vertical tubes traversed by the combustible gas and each stage comprises a loop for regulating the temperature of the fuel gas which maintains this temperature at a constant value regulatable within a range comprised between 150° and 350° C at the outlet of the first stage and between 70° and 180° C at the outlet of the second stage.

4. Installation according to either one of Claims 2 and 3, characterized in that said exchanger-cooler (12) is an air exchanger and the hot air emerging from said exchanger serves to dry or complete drying of the solid fuels before they are introduced in the gasifier, or is used as preheated combustion air to supply one or more burners using the combustible gases leaving the installation.

5. Installation according to any one of Claims 2 to 4, characterized in that it further comprises an exchanger-cooler (14) serving as condenser for the water vapour contained in the combustible gases associated with a separator (14c, 14d) located downstream of said condenser.

6. Installation according to Claim 5, characterized in that said exchanger-cooler serving as condenser comprises vertical tubes (14a) in which the gases circulate from top to bottom, outside which water circulates from bottom to top, distributed correctly thanks to baffles (14b), annularly distributing the rate of flow about each tube or effecting an alternate circulation of water perpendicularly to the axis of the tubes, and equipped at the gas outlet, with a device (14c) for separating the drops of water.

7. Installation according to Claim 5, characterized in that the three exchanger-coolers ($12_1$, $12_2$ and 14) are tubular gas/air exchangers, the gas circulating inside the tubes, made in the form of a compact assembly in three joined parts, separated by partitions each comprising vertical tubes ($12_{1c}$) connected to a cleanable inlet and outlet manifold ($12_{1a}$, $12_{1d}$), a flap for adjusting the rate of cooling air of vertical axis ($12_{d1}$) driven by an actuator ($12_{c1}$), the three air circuits being connected to the delivery or suction of the same fan (12a).

8. Installation according to any one of Claims 2 to 7, characterized in that it comprises

— a first fan (15) which draws the combustible gases emerging from the gasifier (1);

— a device for continuously metering the solid fuels (3) equipped with a flow regulating loop (3a, 3b, 3c) comprising a first regulator (3a);

— a device (6, 6a) for supplying combustion-supporting gas, equipped with a flow regulating loop (6c, 6d, 7) comprising a second regulator (6b);

— a pressure sensor (8) which measures the pressure in the gasifier and which is connected to a third regulator (8a);

— and an operator (8b) which receives a measurement of flow of fuel emitted by a sensor (3c) and a signal emitted by the third regulator (8a) and which emits a first reference value towards the first regulator (3a) and a second reference value towards the second regulator (6b), these two reference values being such that the rate of flow of fuel slightly exceeds the rate of flow of combustible gas necessary for the theoretical gasification of the rate of flow of fuel.

9. Installation according to Claim 8, characterized in that it comprises, on the gas circuit, after cooling thereof, a buffer reservoir (19) of cold gases with a variable internal volume, the volume of the gases being maintained at the pressure of the gas circuit, and in any case at least equal to any pressure of calibration exerted by any means on the variable volume, the maximum internal volume of said buffer reservoir being determined and chosen as a function of the response time of the gasifier and the devices for regulating the rate of flow of the combustion-supporting gas and, possibly, the rate of flow of the solid fuel, and said buffer reservoir (19) comprising a deformable membrane (19a) and a safety envelope (19b).

10. Installation according to any one of Claims 2 to 9, characterized in that it comprises, at the outlet, a so-called zero pressure regulator which delivers the gases under a constant pressure slightly less than atmospheric pressure, whatever the pressure upstream, and which closes automatially when the demand for combustible gas downstream of the pressure regulator is zero.

Fig. 1

Fig.2

14b

14a

14b

14d

14c

Fig. 3

Fig. 4

Fig-5

Fig_6